Europäisches Patentamt

European Patent Office

Office européen des brevets

(19)

(11) Veröffentlichungsnummer: **0 307 612**
**B1**

(12) **EUROPÄISCHE PATENTSCHRIFT**

(45) Veröffentlichungstag der Patentschrift:
01.08.90

(51) Int. Cl.⁵: **B62D 5/30, B62D 5/06**

(21) Anmeldenummer: 88112845.8

(22) Anmeldetag: 06.08.88

(54) Hilfskraftlenksystem für Fahrzeuge.

(30) Priorität: 12.09.87 DE 3730708

(43) Veröffentlichungstag der Anmeldung:
22.03.89 Patentblatt 89/12

(45) Bekanntmachung des Hinweises auf die Patenterteilung:
01.08.90 Patentblatt 90/31

(84) Benannte Vertragsstaaten:
AT CH DE FR GB IT LI NL

(56) Entgegenhaltungen:
DE-A- 2 721 556
GB-A- 2 063 791

(73) Patentinhaber: MAN Nutzfahrzeuge Aktiengesellschaft,
Dachauer Strasse 667 Postfach 50 06 20,
D-8000 München 50(DE)

(72) Erfinder: Huber, Peter, Buchenstrasse 6b,
D-8044 Unterschleissheim(DE)

ACTORUM AG

## Beschreibung

Die Erfindung bezieht sich auf ein Hilfskraftlenksystem für Fahrzeuge mit einem die Lenkbewegung unterstützenden Hauptarbeitszylinder, dessen Hydraulikkreis vom Lenkgetriebe angesteuert wird, und mit einem für die Sicherheitslenkung vorgesehenen Zusatzarbeitszylinder, dessen Hydraulikkreis von dem des Hauptarbeitszylinders getrennt ist und von einer Sicherheitseinrichtung steuerbar ist.

Für beispielsweise sehr schwere Nutzfahrzeuge ist es erforderlich, eine konventionelle Servolenkung oder eine von Handkraft betätigbare Lenkung zusätzlich hydraulisch zu unterstützen. Derartige hydraulische Unterstützung ist aus Sicherheitsgründen redundant auszulegen, d. h., es werden zwei getrennte Hydraulikkreise mit jeweils einer Pumpe, einem Steuerventil und einer Stelleinrichtung vorgesehen.

Ein Haupthydraulikkreis ist dabei während der Fahrt ständig im Einsatz, während der zweite als Zusatzanlage ausgelegte Hydraulikkreis von einem Schaltblock für die Sicherheitslenkung ansteuerbar und in Einsatzbereitschaft ist, indem nur ein geringer Druck aufliegt. Die Zusatzanlage kommt nur dann voll zum Einsatz, wenn die Haupthydraulikanlage ausfällt. Die Stelleinrichtungen bestehen aus je einem Arbeitszylinder, die an verschiedenen Stellen der Lenkgestänge angreifen. Die Anordnung der Arbeitszylinder ist oft problematisch, nachdem ein Flattern des Lenksystems festgestellt wurde.

Der Erfindung liegt die Aufgabe zugrunde, ein Lenksystem der eingangs genannten Art so auszuführen, daß keine Schwingungsbeeinträchtigungen beim Lenksystem auftauchen.

Die Aufgabe wird erfindungsgemäß mit den im Anspruch 1 gekennzeichneten Merkmalen gelöst.

Hierbei bilden die beiden Arbeitszylinder eine Baueinheit, womit nicht nur das Schwingungsproblem des Lenksystems gelöst wird, sondern auch der Platzbedarf verringert und außerdem die Montage wesentlich vereinfacht wird. Anstelle von vier Gelenken - wie sie bei einem System mit zwei getrennten Arbeitszylindern benötigt werden - sind mit der erfindungsgemäßen Lösung nur noch zwei Gelenke erforderlich.

Gemäß einer Ausgestaltung der Erfindung werden die Arbeitskolben von einer gemeinsamen Kolbenstange getragen, die durch eine das Zylindergehäuse in zwei Kammern trennende Trennwand geführt ist. Baulich entspricht die Ausführung einem Zylindergehäuse doppelter Länge, dessen eine Hälfte den Hauptarbeitszylinder und dessen andere Hälfte den Zusatzarbeitszylinder bildet. Wenn der Hydraulikkreis für den Hauptarbeitszylinder ausfällt, erfolgt die Krafteinleitung zur Bewegung der Kolbenstange über den Kolben des Zusatzarbeitszylinders.

Die Anordnung des Arbeitskolbenpaares richtet sich nach den räumlichen Möglichkeiten des jeweiligen Anwendungsfalles und der Auslegung der Arbeitszylinder. Die Kolbenstange des Arbeitskolbenpaares kann somit an den Lenkstockhebel oder den Lenkhebel und bei Zwei- oder Mehrlenkachsen vorzugsweise an den einen hinteren Zwischenhebel angelenkt werden.

In der Zeichnung sind zwei Ausführungsbeispiele schematisch dargestellt.

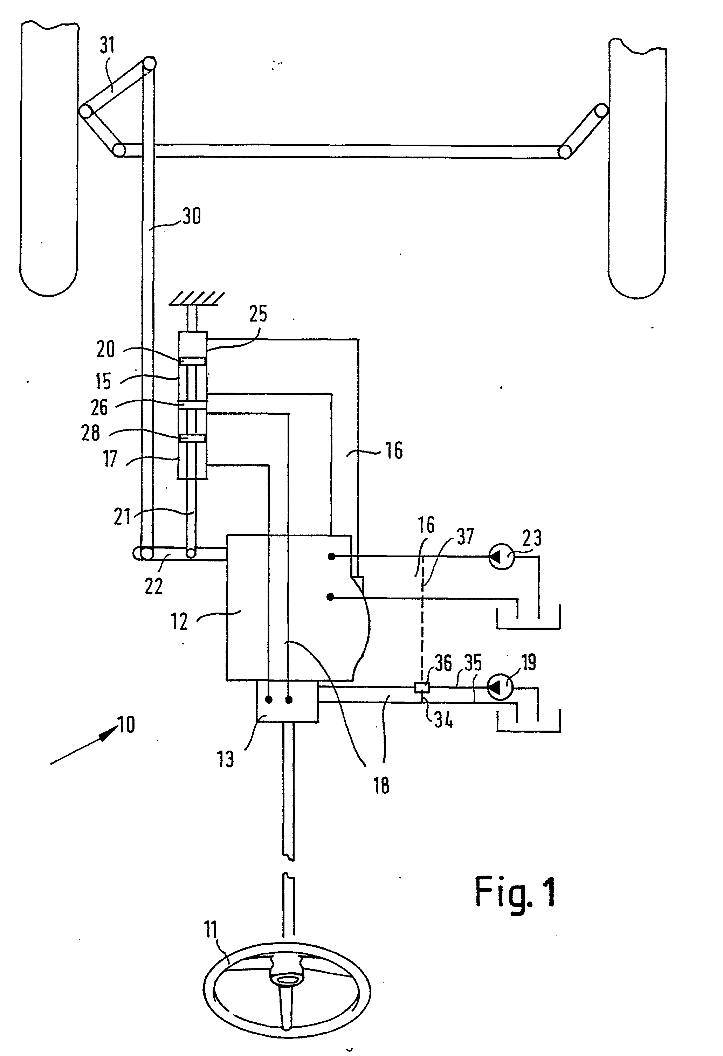

In Figur 1 ist ein Lenksystem 10 gezeigt, das ein von einem Lenkrad 11 betriebenes Lenkgetriebe 12 hat, mit dem ein Schaltblock 13 für eine Sicherheitslenkung in Verbindung steht. Diese Lenkung stellt eine bekannte Servolenkung mit einem nicht näher dargestellten Servomotor dar. Als weitere Lenkhilfe ist ein Hauptarbeitszylinder 15 und der zugehörige Hydraulikkreis 16, 23 vorgesehen, der mittels eines nicht näher dargestellten Steuerventils vom Lenkgetriebe 12 in einer bekannten Weise gesteuert wird. Aus Sicherheitsgründen ist ein Zusatzarbeitszylinder 17 mit dem zugehörigen Hydraulikkreis 18, 19 vorgesehen, der vom Schaltblock 13 steuerbar ist.

Der Hauptarbeitszylinder 15 und der Zusatzarbeitszylinder 17 sind in einer Baueinheit zusammengefaßt, indem für beide Arbeitszylinder ein gemeinsames Zylindergehäuse 25 und eine gemeinsame Kolbenstange 21 vorgesehen sind. Die Arbeitsräume für die beiden Arbeitszylinder 15 und 17 sind mittels einer Trennwand 26, die etwa in Längsrichtung in der Mitte des Zylindergehäuses 25 angeordnet ist, voneinander getrennt. Die Kolbenstange 21 ist mit entsprechenden Dichtungen versehen, durch diese Trennwand 26 durchgeführt und trägt zu jeder Seite der Trennwand 26 einen Kolben 20 bzw. 28 für die beiden Arbeitszylinder. Im Hauptarbeitszylinder 15 ist der Kolben 20 am freien Ende der Kolbenstange 21 angeordnet, so daß auf den Kolben 20 zu beiden Seiten unterschiedliche Kräfte einwirken und damit der Lenkvorgang in den beiden Richtungen mit unterschiedlicher Hilfskraft unterstützt wird. Damit kann eine in ähnlicher Weise asymmetrisch wirkende Hilfskraft des Servomotors ausgeglichen werden, indem die größere Stützkraft vom Servozylinder für die eine Lenkrichtung und vom Hilfsarbeitszylinder 15 für die andere Lenkrichtung genutzt wird.

Im normalen Lenkbetrieb wird über das Lenkgetriebe 12 und den Haupthydraulikkreis 16, 23 der Kolben 20 des Hauptarbeitszylinders 15 zur Betätigung der Kolbenstange 21 beaufschlagt. Die Kolbenstange 21 überträgt die Kraft auf den Lenkstockhebel 22 des Lenkgetriebes 12. Hierbei ist der Zusatzhydraulikkreis 18 über eine Bypaßleitung 34 kurzgeschlossen derart, daß das Druckmittel im wesentlichen durch den Pumpenkreis 19, 34, 35, d. h., den Zusatzarbeitszylinder aussparend, gepumpt wird. Der Verlauf des Druckmittelstromes im Zusatzhydraulikkreis 18, 35 bzw. 34, 35 wird von einem hydraulisch betätigbaren 3-Wegeventil 36 gesteuert, das so ausgelegt ist, daß es in Kurzschlußstellung eine geringe Menge, etwa 10% des Druckmittels, zum Zusatzarbeitskolben 17 durchläßt, damit dieser immer gefüllt, d. h. in Betriebsbereitschaft ist.

Bei Ausfall des Haupthydraulikkreises 16, etwa bei Motorstillstand, Leitungsschaden, fällt der Druck im Haupthydraulikkreis 16 ab. Über eine Druckleitung 37 bewirkt der Druckabfall ein Umschalten des Ventils 36, so daß über den Schaltblock 13 der Zusatzhydraulikkreis 18 und damit der Zusatzarbeitszylinder 17 in Betrieb gesetzt wird. Damit wird die Kolbenstange 21 vom Zusatzkolben 28 betrieben. Der Zusatzarbeitszylinder 17, 18, 19 ist in der Regel so ausgelegt, daß die damit aufgebrachte Stützkraft ausreicht, um das Fahrzeug ab einer bestimmten Fahrgeschwindigkeit (ca. 10 km/h) lenken zu können. Die zugehörige Pumpe 19 wird über die Radachsen betätigt.

In dem in Figur 1 dargestellten Beispiel ist die Kolbenstange 21 der Hilfsarbeitszylinder 15, 17 am Lenkstockhebel 22 angelenkt. Die Krafteinleitung der Stützkraft kann jedoch an irgendeinem Glied des Lenksystems 10 (wie Lenkstange 30, Lenkhebel 31) erfolgen. Die Arbeitszylinder können auch direkt in einer Lenkstange integriert sein.

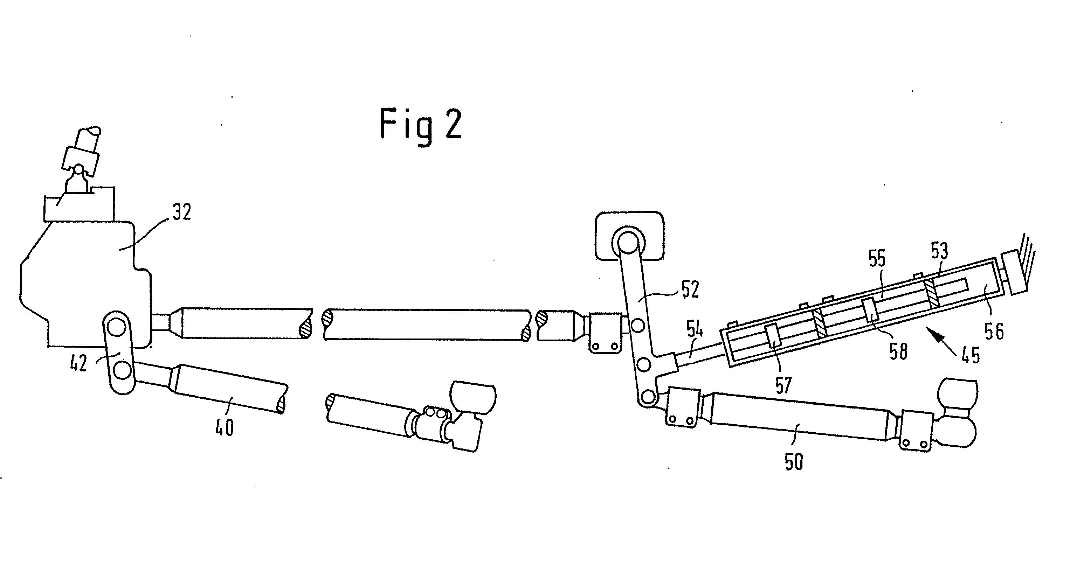

In Figur 2 ist ein Lenksystem für Zweilenkachsen gezeigt, das mit einem Lenkgetriebe 22, einer Lenkstange 40 für das vordere Radpaar und einer Lenkstange 5 für das hintere Radpaar ausgestattet ist. Die Arbeitszylinder-Baueinheit 45 ist in diesem Beispiel an den Zwischenhebel 52 für das hintere Radpaar angelenkt, wo das Raumangebot im allgemeinen günstiger ist. Die Arbeitsweise der Arbeitszylinder 45 ist dieselbe wie im Ausführungsbeispiel gemäß Figur 1. Das Hilfssystem ist natürlich auch für Mehrlenkachsen geeignet.

Wenn eine asymmetrische Stützkrafteinleitung für die beiden Lenkrichtungen unerwünscht ist, kann das Zylindergehäuse 53 länger ausgeführt werden, so daß die Kolbenstange 54 am freien Ende durch ein Zusatzteil 55 verlängerbar ist, das in einen dritten leeren Raum 56 im Zylindergehäuse 53 hineinragt. Damit sind die Arbeitsflächen zu beiden Seiten der beiden Kolben 57 bzw. 58 jeweils gleich.

## Patentansprüche

1. Hilfskraftlenksystem für Fahrzeuge mit einem die Lenkbewegung unterstützenden Hauptarbeitszylinder (15), dessen Hydraulikkreis (16, 23) vom Lenkgetriebe angesteuert wird und mit einem für die Sicherheitslenkung vorgesehenen Zusatzarbeitszylinder (17), dessen Hydraulikkreis (18, 19) von dem des Hauptarbeitszylinders getrennt ist und von einer Sicherheitseinrichtung steuerbar ist, dadurch gekennzeichnet, daß die Arbeitszylinder (15, 17) ein gemeinsames Zylindergehäuse (25) haben und daß die zugehörigen Arbeitskolben (20 bzw. 28) miteinander verbunden sind.

2. Lenksystem nach Anspruch 1, dadurch gekennzeichnet, daß der Hauptarbeitszylinder (15) und der Zusatzarbeitszylinder (17) in einem zylindrischen Gehäuse (25) axial hintereinander angeordnet sind.

3. Lenksystem nach Anspruch 2, dadurch gekennzeichnet, daß die Arbeitskolben (20, 28) der beiden Arbeitszylinder von einer gemeinsamen Kolbenstange (21) getragen sind, die durch eine das zylindrische Gehäuse (28) in zwei Arbeitsräume trennende Trennwand (26) geführt ist.

4. Lenksystem nach einem der vorhergehenden Ansprüche, dadurch gekennzeichnet, daß die Krafteinleitung der Arbeitszylinder (15, 17) über den Lenkstockhebel (22) in das Lenksystem (10) erfolgt.

5. Lenksystem nach einem der Ansprüche 1 bis 3, dadurch gekennzeichnet, daß die Krafteinleitung der Arbeitszylinder (45) über Zwischenhebel (52) bzw. Lenkhebel (31 oder Lenkstange 30) erfolgt.

## Claims

1. Power-assisted steering system for vehicles, with a main operating cylinder (15) assisting the steering movement, the hydraulic circuit (16, 23) of the main operating cylinder (15) being actuated by the steering mechanism, and with an additional operating cylinder (17) provided for the safety steering, the hydraulic circuit (18, 19) of the additional operating cylinder (17) being separate from the main operating cylinder and being controllable by a safety device, characterized in that the operating cylinders (15, 17) have a common cylinder housing (25), and the associated operating pistons (20 and 28 respectively) are connected to each other.

2. A steering system according to Claim 1, characterized in that the main operating cylinder (15) and the additional operating cylinder (17) are arranged axially one behind the other in a cylindrical housing (25).

3. A steering system according to Claim 2, characterized in that the operating pistons (20, 28) of the two operating cylinders are supported by a common piston rod (21) which is guided by a partition wall (26) separating the cylindrical housing (28) [sic] into two operating chambers.

4. A steering system according to any one of the preceding Claims, characterized in that the power of the operating cylinders (15, 17) is transmitted into the steering system (10) by way of the steering lever (22).

5. A steering system according to any one of Claims 1 to 3, characterized in that the power of the operating cylinders (45) is transmitted by way of an intermediate lever (52) or a steering arm (31 or steering rod 30).

## Revendications

1. Système de direction assistée pour véhicules comprenant un vérin hydraulique principal (15) assistant le mouvement de direction, dont le circuit hydraulique (16, 23) est commandé par l'engrenage de direction et un vérin hydraulique d'appoint (17) prévu pour la direction de sécurité, dont le circuit hydraulique (18, 19) est séparé de celui du vérin principal et est commandable par un dispositif de sécurité, caractérisé en ce que les vérins hydrauliques (15, 16) ont un corps de cylindre commun (25) et en ce que les pistons de travail correspondants (20 ou 28) sont reliés entre eux.

2. Système de direction selon la revendication 1, caractérisé en ce que le vérin principal (15) et le vérin d'appoint (17) sont disposés axialement l'un derrière l'autre dans un corps cylindrique (25).

3. Système de direction selon la revendication 2, caractérisé en ce que les pistons de travail des deux vérins sont supportés par une tige de piston commune (21) qui est guidée à travers une cloison (26) séparant le corps cylindrique (28) en deux chambres de travail.

4. Système de direction selon l'une des revendications qui précèdent, caractérisé en ce que l'application de la force des vérins (15, 17) au système de direction (10) est effectuée au moyen du levier de l'arbre de direction (22).

5. Système de direction selon l'une des revendications 1 à 3, caractérisé en ce que l'application de la force des vérins (45) est effectuée au moyen d'un levier intermédiaire (52) ou du levier de direction (31) ou de la barre de direction (30).

Fig. 1

Fig 2